# EUROPÄISCHE PATENTSCHRIFT

(11) **EP 2 099 164 B1**
(45) Veröffentlichungstag und Bekanntmachung des Hinweises auf die Patenterteilung: **19.01.2011**
(21) Anmeldenummer: 08102224.6
(22) Anmeldetag: 03.03.2008
(51) Int. Cl.: H04L 12/40, H04L 12/28, G05B 19/18, G06F 11/20

(54) **Sicherheitsvorrichtung zur sicheren Ansteuerung angeschlossener Aktoren**
Safety device for safe control of attached actuators
Dispositif de sécurité destiné à la commande sécurisée d'actionneurs raccordés

(43) Veröffentlichungstag der Anmeldung: 09.09.2009
(73) Patentinhaber: SICK AG, 79183 Waldkirch (DE)
(72) Erfinder: Moddemann, Jörg, 79350, Sexau (DE)
(74) Vertreter: Hehl, Ulrich

(56) Entgegenhaltungen:
- EP-A- 0 732 654
- EP-A- 1 247 622
- DE-A1- 10 026 923

## Beschreibung

Die Erfindung betrifft eine Sicherheitsvorrichtung und ein Sicherheitsverfahren zu sicheren Ansteuerung und Abschaltung angeschlossener Aktoren nach dem Oberbegriff von Anspruch 1 beziehungsweise 9.

Sicherheitsschaltgeräte dienen dazu, bei Anliegen eines Gefahrensignals fehlerfrei auf eine vorgegebene Art zu reagieren. Eine Sicherheitsvorrichtung ist ein System mit einer Sicherheitssteuerung und Anschlüssen für Ausgänge, die sicher abgeschaltet werden können. Sie kann also ein Sicherheitsschaltgerät sein, aber auch darüber hinaus andere Ausgänge als nur Schaltausgänge erzeugen. Eine typische Anwendung der Sicherheitstechnik ist die Absicherung gefährlicher Maschinen, wie etwa Pressen oder Roboter, die sofort abgeschaltet oder abgesichert werden müssen, wenn sich Bedienpersonal in unerlaubter Weise nähert. Dazu ist ein Sensor vorgesehen, der die Annäherung detektiert, wie etwa ein Lichtgitter oder eine Sicherheitskamera. Erkennt ein solcher Sensor eine Gefährdung, so muss eine ihm nachgeordnete Schaltung absolut zuverlässig ein Abschaltsignal generieren.

In der Praxis überwacht zumeist nicht ein einzelner Sensor eine einzelne Maschine, sondern es müssen eine ganze Reihe von Gefährdungsquellen überwacht werden. Die entsprechende Vielzahl zugehöriger Sensoren, die jeweils ein Schaltereignis definieren können, und geeigneter Maßnahmen zur Beseitigung von Gefährdungen muss dann in der Sicherheitsvorrichtung konfiguriert und verschaltet werden.

Damit die Sicherheitsvorrichtung flexibel für die unterschiedlichsten denkbaren Konfigurationen von Sensoren und Aktoren in industriellen Anlagen angepasst werden kann, ist beispielsweise aus der DE 100 20 075 C2 bekannt, Modulreihen aus Eingangsmodulen und Ausgangsmodulen zu bilden, welche also jeweils einen oder mehrere Eingänge oder einen oder mehrere Ausgänge aufweisen. Je nach benötigter Anzahl von Eingängen und Ausgängen kann die Modulreihe erweitert werden.

Steuerinformationen werden dabei von mindestens einer Steuereinheit, die selbst als eigenes Steuerungsmodul ausgebildet sein kann, über eine serielle Kommunikation ausgetauscht, häufig einen sogenannten Rückwandbus ("Backplane"). Die Module besitzen dafür Steuerelemente, damit ihre Eingänge und Ausgänge an dem Datenaustausch der Buskommunikation teilnehmen können.

Nachteilig an den herkömmlichen Lösungen ist, dass die Geschwindigkeit einer Datenübertragung durch den Bustakt begrenzt ist und die Übertragungszeiten und Zykluszeiten der seriellen Kommunikation direkt in die Reaktionszeit des Gesamtsystems eingehen. Vor allem bei längeren Modulreihen ergibt sich damit eine relativ hohe Reaktionszeit, während aber andererseits Sicherheitsanforderungen oder die Sicherheitsapplikation fordern, eine sicherheitsgerichtete Abschaltung jeweils innerhalb eines kurzen Auswertungszyklus' zu garantieren. Eine verzögerte Reaktionszeit bedeutet in einigen Applikationen auch eine schlechtere Produktivität der Maschinen und der Anlage.

Das zentrale Steuerungsmodul ist in der Lage, eine relativ große Anzahl von Teilnehmern, also beispielsweise zwölf weiteren Modulen, zu steuern. Die Übertragung eines Abschaltsignals in einer derart langen Modulreihe ist aber aus den genannten Gründen für eine geforderte Sicherheitskategorie zu langsam, so dass Einschränkungen in den Anwendungsmöglichkeiten entstehen.

Grundsätzlich wäre denkbar, die Reaktionszeiten durch eine parallele Kommunikation zu verkürzen. Dies ist aber allenfalls für sehr kleine Systeme geeignet, da ansonsten die Anzahl der parallelen Leitungen nicht mehr handhabbar ist.

Aus der EP 1 247 622 A2 ist ein Verfahren zum sicherheitsgerichteten Überwachen eines Roboters mit einer zentralen oder dezentralen Steuereinheit bekannt. Verlässt dieser Roboter einen vorgegebenen Sicherheitsbereich, so wird dies von Sensoren erkannt und eine Abschaltung erzeugt. Ein Lage-Istwertsignal wird dabei einkanalig erfasst und zweikanalig ausgewertet. Für die zweikanalige Auswertung sind in einem Safety-Controller zwei CAN-Controller A und B sowie zwei Mikrocomputer vorgesehen. Über die CAN-Busse werden keine Abschaltsignale ausgegeben.

Die DE 100 26 923 A1 zeigt ein Leitsystem für Flugplatzbefeuerungsanlagen. Dabei ist eine zentrale Steuerungsanlage über ein redundantes Bussystem mit der Aktorik und Sensorik von Flugplatzbefeuerungsgeräten verbunden. Bei diesem System sind keine Abschaltsignale vorgesehen, da das Ziel die korrekte Leitbeleuchtung für Flugzeuge und nicht die Ausräumung von Gefahren durch rechtzeitige Abschaltung von Gefahrenquellen ist.

Es ist daher Aufgabe der Erfindung, in einem herkömmlichen Sicherheitsschaltsystem der genannten Art kurze Abschaltzeiten zu erreichen.

Diese Aufgabe wird durch eine Sicherheitsschaltvorrichtung gemäß Anspruch 1 und ein Sicherheitsschaltverfahren gemäß Anspruch 9 gelöst.

Dabei geht die Lösung von dem Prinzip aus, besonders zeitkritische Kommunikation mit einem möglichst minimalen zusätzlichen Hardwareaufwand zu beschleunigen und zugleich für weitere Kommunikation auf bewährte und in herkömmlichen. Systemen bereits vorhandene Verbindungen zurückzugreifen. Es wird also ein Optimum beschleunigter Abschaltkommunikation bei möglichst geringem Hardwareaufwand gefunden. Es ist auch denkbar, die oder eine weitere erfindungsgemäße Bypassleitung für andere besonders wichtige und zeitkritische Signale als ein Abschaltsignal zu verwenden, um die Produktivität zu erhöhen.

Die Lösung hat also den Vorteil, herkömmliche Architekturen und Bestandteile von Sicherheitsschaltgeräten weiter zu nutzen, zugleich aber die Abschaltzeit des Systems so zu verkürzen, dass Sicherheitsanforderungen oder Sicherheitskategorien eingehalten werden können. Damit ist ermöglicht, auch eine größere Anzahl von Eingängen und Ausgängen mit einer seriellen Kommunikation untereinander zu verbinden, ohne durch die Erweiterung der Teilnehmer an der Kommunikation die Reaktionszeit einer Abschaltung zu verzögern. Die erfindungsgemäße Lösung eignet sich daher auch für große und komplexe Anlagen.

In vorteilhafter Weiterbildung sind jeweils Gruppen von Ein- und/oder Ausgängen in einem Modul zusammengefasst, um eine modulare Sicherheitsschaltvorrichtung insbesondere in Form einer Modulreihe zu bilden und/oder wobei jedes Modul in einem insbesondere gleichartigen Gehäuse mit jeweils einem Stecker und einer Buchse zum Ineinanderstecken angeordnet ist. Durch die Modularität kann das Sicherheitsschaltgerät in einfacher Weise erweitert und angepasst werden und es kann vermieden werden, für zukünftige Erweiterungen mit einer großen Zahl von Eingängen und Ausgängen planen zu müssen, welche dann brachliegen.

Vorteilhafterweise ist die Sicherheitssteuerung in einem eigenen Steuerungsmodul vorgesehen, wobei das Steuerungsmodul insbesondere selbst Ein- und/oder Ausgänge aufweist. Das Steuerungsmodul bildet den Kopf der Modulreihe und steuert etwa Abschaltungen und Konfigurationen sowie die serielle Kommunikation. Wenn es selbst Ein- oder Ausgänge besitzt, so bildet es in sich bereits die kürzeste denkbare Modulreihe beziehungsweise stellt in einer längeren Modulreihe eine Reserve für weitere Anschlüsse bereit.

Bevorzugt ist mindestens eine erste und eine zweite Bypassleitung vorgesehen, wobei die erste Bypassleitung die Sicherheitssteuerung mit mindestens einem Ausgang und die zweite Bypassleitung einen Eingang mit mindestens einem Ausgang verbindet. Derartige weitere Bypassleitungen ermöglichen, dass mehrere Signalquellen zu einer raschen Abschaltung führen können, nämlich die Sicherheitssteuerung selbst, aber auch ein direkt über eine Bypassleitung auf Ausgänge wirkender Eingang. Damit wird eine höhere Flexibilität geschaffen.

Die Ausgänge sind vorteilhafter Weise dafür ausgebildet, auf die Bypassleitung konfiguriert zu werden, wobei das Konfigurieren für jeden mit der Bypassleitung verbundenen Ausgang festlegt, ob dieser Ausgang auf das Abschaltsignal hin den angeschlossenen Aktor abschalten soll oder nicht. Somit kann die physische Verbindung der Bypassleitung zur Vereinfachung der Hardware stets zu allen oder einer großen Zahl von Ausgängen führen. Sind an Ausgängen nicht sicherheitskritische Aktoren oder solche angeschlossen, die aus anderen Gründen von einer Abschaltung nicht betroffen sein sollen, so kann dies durch die Konfiguration eingestellt werden.

Die Eingänge, Ausgänge, die Sicherheitssteuerung, die serielle Kommunikation und/oder die Bypassleitung sind bevorzugt für einen Funktionstest und/oder fehlersicher, insbesondere zweikanalig ausgebildet. Fehlerquellen innerhalb des Sicherheitsschaltgeräts können auf diese Weise erkannt oder unterdrückt werden.

In bevorzugter Weiterbildung ist eine externe Anlagensteuerung vorgesehen und die Sicherheitssteuerung derart ausgebildet, dass Ansteuerungen der Aktoren von der Anlagensteuerung nur auf die Aktoren wirken, Wenn die Sicherheitssteuerung zustimmt. Eine solche externe Anlagensteuerung ist gewöhnlich nicht sicher ausgelegt. Daher muss der Sicherheitssteuerung überlassen bleiben, ob ein Aktor betrieben werden kann. Indem die Sicherheitssteuerung der Anlagensteuerung zustimmen muss, etwa durch eine einfache UND-Verknüpfung, kann die Anlagensteuerung ohne Verlust an Sicherheit und Geschwindigkeit ihre nicht sicherheitskritischen Befehle an die Aktoren übertragen und somit eine möglichst störungsfreie Einbindung des Sicherheitsschaltgeräts ermöglichen.

In einer weiteren bevorzugten Fortbildung der Erfindung ist die Sicherheitssteuerung dafür ausgebildet, ein Abschaltsignal zusätzlich über die serielle Kommunikation zu übertragen, wobei die Ausgänge derart ausgebildet sind, dass ein Einschalten eines angeschlossenen Aktors nur erfolgen kann, wenn die Sicherheitssteuerung zustimmt. Auch wenn der Abschaltbefehl selbst über die Bypassleitung übertragen wird, werden auf diese Weise auch Teilnehmer der seriellen Kommunikation über die Abschaltung informiert, welche nicht mit der Bypassleitung verbundenen oder nicht auf diese konfiguriert sind und sie können ihrerseits beispielsweise nicht sicherheitskritische Abschaltungen vornehmen. Zudem ist durch die Übertragung eines Abschaltsignals per serieller Kommunikation sichergestellt, dass selbst bei einem Ausfall der Bypassleitung zumindest etwas verspätet eine Abschaltung erfolgt. Schließlich ist das angemessene Signal zum Wiedereinschalten eins sicherheitsgerichteten abgeschalteten Aktors nicht nur die Freigabe der Bypassleitung, sondern auch eine Zustimmung der Sicherheitssteuerung, welche beispielsweise nach Kontrolle und Behebung der Ursachen der Abschaltung erst nach einer Autorisierung einer Bedienperson erfolgen darf.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine erste Ausführungsform der Erfindung mit einem Steuerungsmodul und drei Anschlussmodulen, einigen beispielhaften angeschlossenen Sensoren und Aktoren und einer Bypassleitung;
- Fig. 2: eine zweite Ausführungsform der Erfindung, welche im Unterschied zur ersten Ausführungsform zusätzlich eine zweite Bypassleitung aufweist; und
- Fig. 3: den Signalverlauf an Bypassleitung, Backplane und einem Ausgang zur Erläuterung der erforderlichen Zustimmung durch die Sicherheitssteuerung bei Wiedereinschalten eines Aktors.

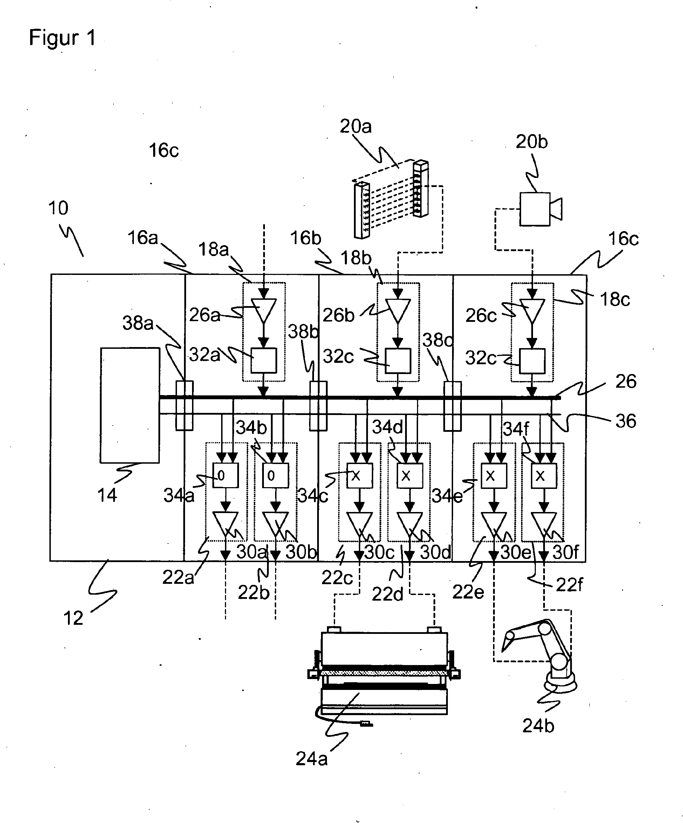

Figur 1 zeigt eine erste Ausführungsform einer erfindungsgemäßen Sicherheitsvorrichtung 10 oder einem Sicherheitsschaltgerät mit einem zentralen Steuerungsmodul 12, welches eine Sicherheitssteuerung 14 und drei Anschlussmodule 16a-c aufweist. Das zentrale Steuerungsmodul 12 arbeitet als Master für die Kommunikation in der Sicherheitsvorrichtung 10, jedoch können diese und weitere Steuerungsaufgaben physisch auch verteilt sein und werden dennoch begrifflich unter der zentralen Steuerung 14 zusammengefasst. In jedem Anschlussmodul 16a-c sind Eingänge 18a-c zum Anschluss von Sensoren 20a-b und Ausgänge 20a-f zum Anschluss von Aktoren 24a-b vorgesehen.

Ein Lichtgitter 20a und eine Sicherheitskamera 20b sind Beispiele für sicherheitsrelevante Sensoren, welche ein Signal liefern können, auf das als Reaktion eine sicherheitsgerichtete Abschaltung erfolgt. Dies kann eine Unterbrechung der Lichtstrahlen des Lichtgitters 20a durch ein Körperteil oder die Erkennung eines unzulässigen Eingriffs in einen Schutzbereich durch die Sicherheitskamera 20b sein. An die Eingänge 18a-c können weitere Sicherheitssensoren beliebiger Art, wie Laserscanner, 3D-Kameras, Schaltmatten oder kapazitive Sensoren angeschlossen werden, aber auch sonstige Sensoren etwa zur Aufnahme von Messdaten oder einfache Schalter wie ein Not-Aus-Schalter.

Eine Abkantpresse 24a und ein Roboter 24b sind als Beispiele Bedienpersonal bei unzulässigem Eingriff gefährdender Aktoren jeweils zweikanalig an Ausgänge 22c-d bzw. 22e-f angeschlossen und können somit von dem Sicherheitsschaltgerät 10 einen Abschaltbefehl erhalten, um bei Erkennung einer Gefährdung oder eines unzulässigen Eingriffs durch Sicherheitssensoren 20a-b die Aktoren 24a-b abzuschalten oder in einen sicheren Zustand zu verbringen. Dabei kann das Lichtgitter 20a der Überwachung der Abkantpresse 24a und die Sicherheitskamera 20b der Überwachung des Roboters 24b dienen, so dass einander funktionell zugehörige Sensoren 20a-b und Aktoren 24a-b auch jeweils an einem Modul 16a bzw. 16b angeschlossen sind. Die funktionelle Zuordnung erfolgt aber über die Sicherheitssteuerung 14, so dass eine solche Abbildung der Anlage zwar übersichtlicher, keineswegs aber erforderlich ist. Weitere als die dargestellten Aktoren sind denkbar, und zwar sowohl solche, welche einen Gefahrenbereich erzeugen als auch andere, etwa eine Warnlampe, eine Sirene, eine Anzeige und dergleichen mehr.

Zwischen der Sicherheitssteuerung 14 und den Eingängen 18a-c bzw. den Ausgängen 22a-f besteht eine Backplane genannte serielle Kommunikationsverbindung, die insbesondere ein Bus 26 ist und auf einem Feldbusstandard, wie IO-Link, Profibus, CAN oder auch einem proprietären Standard basieren und zusätzlich auch fehlersicher ausgelegt sein kann.

Die Eingänge 18a-c und Ausgänge 20a-f weisen jeweils einen eigentlichen Anschluss 28a-c bzw. 30a-f und eine Mikrosteuerung 32a-c bzw. 34a-f zur Teilnahme an der Kommunikation mit dem Bus 26 auf. Damit können Sensorsignale der Sensoren 20a-b auf den Bus 26 gelegt und über den Bus 26 Befehle an die Aktoren 24a-b erteilt werden. Im Gegensatz zur Darstellung kann die Kommunikation aber auch in den Eingängen 18a-c und den Ausgängen 22a-f bidirektional sein, dann kann beispielsweise den Sensoren 20a-b ein Signal wie eine Statusabfrage übermittelt oder von den Aktoren 24a-b eine Statusinformation empfangen und über den Bus 26 ausgetauscht werden.

Für die Weiterleitung einer sicherheitsgerichteten Abschaltung (OSSD, Output Switching Signal Device) von einem Sensor 20a-b an betroffene Aktoren 24a-b ist eine Bypassleitung 36 vorgesehen, welche die Sicherheitssteuerung 14 mit den Ausgängen 22a-f verbindet. Das Abschaltsignal wird also parallel zu und unabhängig von der seriellen Kommunikation auf dem Bus 26 weitergeleitet und ist wegen seiner Unabhängigkeit von einem Bustakt besonders schnell.

Über die Mikrosteuerungen 34a-f können die an die Bypassleitung 36 angeschlossenen Ausgänge 22a-f daraufhin konfiguriert werden, ob sie auf die Bypassleitung 36 lauschen sollen oder nicht. Ein nicht mit einer Gefahrenquelle verbundener Ausgang 22a-b ist per Konfiguration ("0") angewiesen, die Abschaltung nicht weiterzugeben, während Ausgänge 22c-f mit angeschlossenen gefährlichen Aktoren 24a-b auf die Bypassleitung 36 lauschen und das Abschaltsignal zur Ausführung der Abschaltung an die Aktoren 24a-b weitergeben. Die Module 16a-c können wegen der Konfigurationsmöglichkeit einheitlich mit durchgehender Bypassteitung 36 gebaut werden, wobei die notwendige Flexibilität der Ansteuerung durch die Bypassleitung 36 mittels der Konfiguration hergestellt wird.

Zusätzlich zur Übertragung auf der Bypassleitung 36 kann das Abschaltsignal auch auf dem Bus 26 übertragen werden, damit nicht von der Abschaltung angesprochene Aktoren an so konfigurierten Ausgängen 22a-b in einen Ruhezustand verbracht werden können, oder damit im Falle eines Defekts der Bypassleitung 36 zumindest verzögert durch die langsamere Buskommunikation eine Abschaltung erfolgt.

Die Module 12, 16a-c sind jeweils in einheitlichen Gehäusen untergebracht und werden durch Anschlussstücke 38 mechanisch und elektrisch miteinander verbunden. Sicherheitssteuerung 14, Eingänge 18a-c, Ausgänge 22a-f, Bus 26 und Bypassleitung 36 sind fehlersicher ausgebildet, also durch Maßnahmen wie zweikanalige Ausführung, durch diversitäre, redundante, selbstprüfende oder sonst sichere Auswertungen und Selbsttests. Entsprechende Sicherheitsanforderungen für die Sicherheitssteuerung sind in der Norm EN 954-1 bzw. ISO 13849 (performance level) festgelegt. Die damit mögliche Sicherheitsstufe und die weiteren Sicherheitsanforderungen an eine Anwendung sind in der Norm EN 61508 bzw. EN 62061 definiert.

Die Module 12, 16a-c, ihre Sicherheitssteuerung 14 und die Eingänge 18a-c sowie Ausgänge 22a-f können durch außen angebrachte Drehschalter oder sonstige Bedienelemente konfiguriert werden, sowohl hinsichtlich des Lauschens auf die Bypassleitung 36 als auch zur Abbildung der Sicherheitssteuerungsaufgabe, also insbesondere welche Ereignisse zu einer Abschaltung führen sollen. Alternativ zu solchen Bedienelementen können drahtlose oder drahtgebundene Schnittstellen für den Anschluss einer Konfigurationssoftware per Notebook, Computer, PDA, Mobiltelefon oder dergleichen vorgesehen sein. Zur vereinheitlichen Konfiguration kann in der Sicherheitssteuerung 14 auch ein Websever implementiert sein.

Das Sicherheitsschaltgerät 10 kann über ein Gateway, welches ein eigenes Modul bildet oder in die Sicherheitssteuerung 14 integriert ist, an eine externe Anlagensteuerung angeschlossen sein, welche mit nicht sicherheitsrelevanten Steuerungsaspekten befasst ist. Die Anbindung kann drahtlos oder drahtgebunden, in der Praxis meist über einen Feldbus erfolgen. Gibt die externe Steuerung einen Befehl an einen der Aktoren 24a-b, und zwar alternativ über die Ausgänge 22a-f, welche auch Abschaltsignale ausgeben können, oder auf eigene Ausgänge, so wird er nur dann wirksam, wenn die Sicherheitssteuerung 14 zustimmt, also etwa durch UND-Verknüpfung von Ansteuerung und Zustimmungssignal. Damit wird verhindert, dass die externe Anlagensteuerung eine gefährliche Situation schafft.

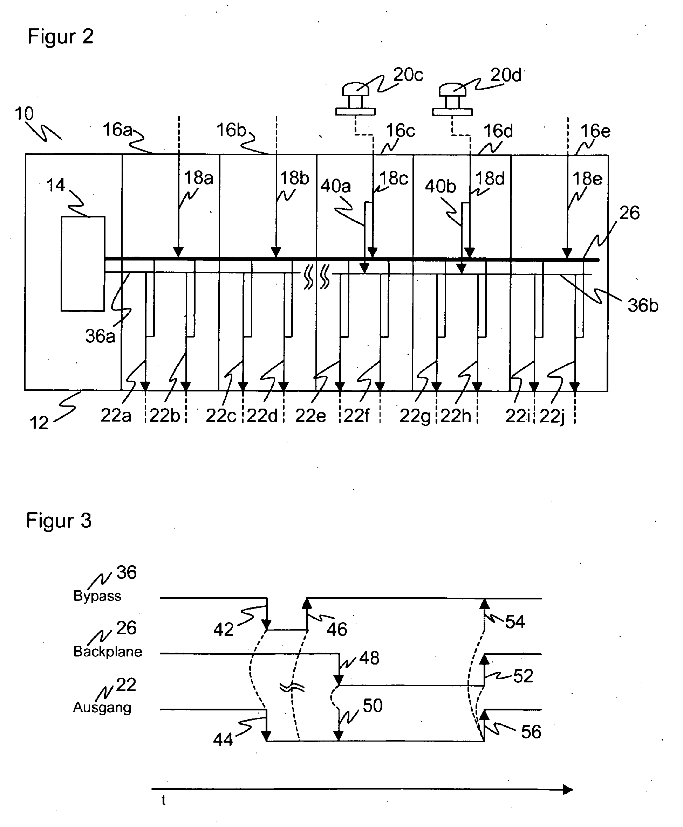

Figur 2 zeigt eine zweite Ausführungsform der Erfindung, wobei hier und im Folgenden gleiche Bezugszeichen die gleichen Merkmale bezeichnen. Im dargestellten Beispiel sind anders als in Figur 1 insgesamt fünf Anschlussmodule 16a-e, also zwei zusätzliche Anschlussmodule 16d-e dargestellt. Weiterhin wurden, um die Übersichtlichkeit zu erhalten, die Eingänge 18a-e und die Ausgänge 22a-j vereinfacht lediglich als Pfeile dargestellt, ohne damit inhaltliche Unterschiede ausdrücken zu wollen. Die Eingänge 18a-e und die Ausgänge 22a-j sind also auch hier dafür ausgebildet, an der Kommunikation über den Bus 26 teilzunehmen und, ebenso wie in Figur 1, können Sensoren 20a-b und Aktoren 24a-b angeschlossen werden.

Der Unterschied der zweiten Ausführungsform gegenüber der ersten Ausführungsform liegt darin, dass zwei Bypassleitungen 36a und 36b vorgesehen sind. Über die erste Bypassleitung 36a erreicht die Sicherheitssteuerung 14 die Ausgänge 22a-d der ersten beiden Anschlussmodule 16a-b. Die zweite Bypassleitung 36b ist an die Ausgänge 22e-j der hinteren drei Anschlussmodule 16c-e angeschlossen. Die zweite Bypassleitung 36b wird über Sensoren 20c-d und besondere Abschalteingänge 40a-b angesprochen, welche zusätzlich zum Bus 26 auch mit der zweiten Bypassleitung 36b verbunden sind. Beispielhaft sind hier Not-Aus-Schalter 20c-d dargestellt.

Somit können Aktoren an den ersten beiden Anschlussmodulen 16a-b über die Sicherheitssteuerung 14, Aktoren an den hinteren drei Anschlussmodulen 16c-e über jeden der beiden Not-Aus-Schalter 20c-d abgeschaltet werden. Die Abschalteingänge 40a-b können konfigurierbar ausgebildet werden, so dass also durch eine Konfiguration festgelegt wird, ob ihr Signal die Bypassleitung aktiviert oder nicht. Selbstverständlich können statt der dargestellten zwei b auch mehr oder weniger Abschalteingänge 40a-b vorgesehen sein.

Nach dem gleichen Grundprinzip kann es weitere Bypassleitungen geben. Diese können wie im Beispiel der Figur 2 jeweils nur alternativ, aber auch partiell oder durchgehend parallel ausgebildet sein, sofern man den zusätzlichen Hardwareaufwand leisten möchte. Damit können praktisch beliebige Konfigurationen von eine Abschaltung auslösenden Ereignissen und Gruppen von Aktoren dargestellt werden, welche jeweils auf ein solches Ereignis mit einer Abschaltung reagieren sollen.

Figur 3 zeigt Signale in der Bypassleitung 36, dem Bus 26 und einem auf die Bypassleitung lauschenden Ausgang 22 während einer Abschaltung und einem anschließenden Wiedereinschalten. Das Abschaltsignal auf der Bypassleitung 36, also die fallende Flanke 42, führt zu einer sofortigen fallenden Flanke 44 auf dem Ausgang 22 und damit einer Abschaltung des angeschlossenen Aktors. Wenn zu einem späteren Zeitpunkt das auslösende Ereignis vorbei ist, also etwa kein unzulässiger Eingriff in einem Schutzbereich mehr vorliegt, liegt dementsprechend auch kein Abschaltsignal mehr auf der Bypassleitung 36. Die entsprechende steigende Flanke 46 führt aber noch nicht zu einer Wiedereinschaltung des Aktors. Zunächst muss hier noch die Sicherheitssteuerung 14 zustimmen, etwa weil die Freigabe weiterer Sensoren oder abzuwarten ist.

Auf dem Bus 26 wird das Abschaltsignal auch, aber zeitverzögert durch eine fallende Flanke 48 signalisiert. Abweichend von der Darstellung in Figur 3 kann dieses verzögerte Abschaltsignal selbstverständlich auch anliegen, ehe die steigende Flanke 46 auf der Bypassleitung schon wieder das Ende des auslösenden Ereignisses anzeigt. Die fallende Flanke 46 auf dem Bus 26 führt erneut zu einem Abschaltsignal 50 an den Aktor, welches aber keine Auswirkung mehr hat, da dieser bereits abgeschaltet ist.

Signalisiert die Sicherheitssteuerung 14 zu einem späteren Zeitpunkt durch eine steigende Flanke 52 ihre Zustimmung zu einer Wiedereinschaltung und liegt gleichzeitig, wie durch einen gestrichelten Pfeil 54 angedeutet, auch auf der Bypassleitung 36 kein Abschaltsignal mehr, so folgt auch der Ausgang 22 dem Einschaltsignal durch eine steigende Flanke 56, und der angeschlossenen Aktor wird wieder aktiviert.

## Patentansprüche

1. Sicherheitsvorrichtung (10) mit mindestens einer Sicherheitssteuerung (14) und einer Vielzahl von Ausgängen (22a-22j) zur sicheren Ansteuerung angeschlossener Aktoren (24a, 24b) und Eingängen (18a-18e) zum Empfang von Signalen angeschlossener Sensoren (20a, 20b) sowie einer seriellen Kommunikationseinrichtung (26), insbesondere einem Bus, welcher die Sicherheitssteuerung (14) mit den Ausgängen (22a-22j) und Eingängen (18a-18e) verbindet, um Datenpakete zu empfangen und/oder zu senden,
**dadurch gekennzeichnet,**
**dass** zusätzlich zu der seriellen Kommunikation (26) mindestens eine Bypassleitung (36) parallel zu und unabhängig von der seriellen Kommunikation (26) vorgesehen ist, welche unabhängig von einem Bustakt ist und welche die Sicherheitssteuerung (14) oder einen Eingang (18a-18e) mit mindestens einem Ausgang (22a-22j) verbindet, um an einen an dem Ausgang (22a-22j) angeschlossenen Aktor (24a, 24b) ein Abschaltsignal unabhängig von der seriellen Kommunikation (26) übertragen zu können.

2. Sicherheitsvorrichtung (10) nach Anspruch 1,
wobei jeweils Gruppen von Eingängen (18a-18e) und/oder Ausgängen (22a-22j) in einem Modul (16a-16e) zusammengefasst sind, um eine modulare Sicherheitsschaltvorrichtung (10) insbesondere in Form einer Modulreihe zu bilden und/oder wobei jedes Modul (16a-16e) in einem insbesondere gleichartigen Gehäuse mit jeweils einem Stecker (38a-38c) und einer Buchse (38a-38c) zum Ineinanderstecken angeordnet ist.

3. Sicherheitsvorrichtung (10) nach Anspruch 1 oder 2,
wobei die Sicherheitssteuerung (14) in einem eigenen Steuerungsmodul (12) vorgesehen ist und wobei das Steuerungsmodul (12) insbesondere selbst Ein- und/oder Ausgänge aufweist.

4. Sicherheitsvorrichtung (10) nach einem der vorhergehenden Ansprüche,
wobei mindestens eine erste und eine zweite Bypassleitung (36a, 36b) vorgesehen ist und wobei die erste Bypassleitung (36a) die Sicherheitssteuerung (14) mit mindestens einem Ausgang (22a-22d) und die zweite Bypassleitung (36b) mindestens einen Eingang (40a, 40b) mit mindestens einem Ausgang (22e-22j) verbindet.

5. Sicherheitsvorrichtung (10) nach einem der vorhergehenden Ansprüche, wobei die Ausgänge (22a-22j) dafür ausgebildet sind, auf die Bypassleitung (36) konfiguriert zu werden, und wobei das Konfigurieren für jeden mit der Bypassleitung (36) verbundenen Ausgang (22a-22j) festlegt, ob dieser Ausgang (22a-22j) auf das Abschaltsignal hin den angeschlossenen Aktor (24a, 24b) abschalten soll oder nicht.

6. Sicherheitsvorrichtung (10) nach einem der vorhergehenden Ansprüche, wobei die Eingänge (18a-18c), die Ausgänge (22a-22j), die Sicherheitssteuerung (14), die serielle Kommunikationseinrichtung (26) und/oder die Bypassleitung (36) für einen Funktionstest und/oder fehlersicher, insbesondere zweikanalig ausgebildet sind.

7. Sicherheitsvorrichtung (10) nach einem der vorhergehenden Ansprüche, wobei eine externe Anlagensteuerung vorgesehen ist und die Sicherheitssteuerung (14) derart ausgebildet ist, dass Ansteuerungen der Aktoren (24a, 24b) von der Anlagensteuerung nur auf die Aktoren (24a, 24b) wirken, wenn die Sicherheitssteuerung zustimmt.

8. Sicherheitsvorrichtung (10) nach einem der vorhergehenden Ansprüche, wobei die Sicherheitssteuerung (14) dafür ausgebildet ist, ein Abschaltsignal zusätzlich über die serielle Kommunikationseinrichtung (26) zu übertragen, und/oder wobei die Ausgänge (22a-22j) derart ausgebildet sind, dass ein Einschalten eines angeschlossenen Aktors (24a, 24b) nur erfolgen kann, wenn die Sicherheitssteuerung (14) zustimmt.

9. Sicherheitsverfahren zu sicheren Abschaltung von an eine Vielzahl von Ausgängen (22a-22j) angeschlossenen Aktoren (24a, 24b), wobei die Ausgänge (22a-22j) über eine serielle Kommunikationseinrichtung (26), insbesondere einen Bus kommunizieren und von einer Sicherheitssteuerung (14) angesteuert werden, welche in Abhängigkeit von Sensorsignalen Abschaltesignale erzeugt, **dadurch gekennzeichnet,**
**dass** beim Abschalten ein Abschaltsignal parallel zu und unabhängig von der seriellen Kommunikation (26) von der Sicherheitssteuerung (14) über eine Bypassleitung (36) unabhängig von einem Bustakt an mindestens einen Ausgang (22a-22j) und den daran angeschlossenen Aktor (24a, 24b) übertragen wird.

10. Sicherheitsverfahren nach Anspruch 9,
wobei das Abschaltsignal an eine erste Gruppe der Ausgänge (22a-22d) über eine erste Bypassleitung (36a) und an eine zweite Gruppe der Ausgänge (22e-22j) über eine zweite Bypassleitung (36b) übertragen wird, und/oder wobei das Abschaltsignal von mindestens einer Sicherheitssteuerung (14) und/oder von mindestens einem Eingang (40a, 40b) generiert wird, an den ein Sensor (20c, 20d) angeschlossen ist.

11. Sicherheitsverfahren nach Anspruch 9 oder 10,
wobei für an die Bypassleitung (36) angeschlossene Ausgänge (22a-2j2) mittels einer Konfiguration entschieden wird, ob der jeweilige Ausgang auf ein über die Bypassleitung (36) empfangenes Abschaltsignal hin den angeschlossenen Aktor (24a, 24b) abschalten soll oder nicht.

12. Sicherheitsverfahren nach einem der Ansprüche 9 bis 11,
wobei eine Sicherheitssteuerung (14) die Ausgänge (22a-22j), Eingänge (18a-18e), die serielle Kommunikationseinrichtung (26) und die Bypassleitung (36) steuert, und/oder wobei die Sicherheitssteuerung (14) ein Abschaltsignal zusätzlich zur Bypassleitung (36) über die serielle Kommunikationseinrichtung (26) überträgt.

13. Sicherheitsverfahren nach Anspruch 12,
wobei Ansteuerungen einer externen Anlagensteuerung an die Ausgänge (22a-22j) übertragen werden und diese Ansteuerungen nur auf die Aktoren (24a, 24b) wirken können, wenn die Sicherheitssteuerung (14) zustimmt, und/oder wobei ein Einschalten eines an einen Ausgang (22a-22j) angeschlossenen Aktors (24a, 24b) nur erfolgen kann, wenn die Sicherheitssteuerung (14) zustimmt.

## Claims

1. A safety device (10) having at least one safety control (14), having a plurality of outputs (22a-22j) for the safe control of connected actuators (24a, 24b) and having inputs (18a-18e) for the reception of signals of connected sensors (20a, 20b) as well as having a serial communications device (26), in particular a bus, which connects the safety control (14) to the outputs (22a-22j) and to the inputs (18a-18e) to receive and/or to transmit data packets,
**characterized in that**,
in addition to the serial communication (26), at least one bypass line (36) is provided parallel to and independently of the serial communication (26), said bypass line being independent of a bus clock and connecting the safety control (14) or an input (18a-18e) to at least one output (22a-22j) to be able to transmit a deactivation signal independently of the serial communication (26) to an actuator (24a, 24b) connected to the output (22a-22j).

2. A safety device (10) in accordance with claim 1, wherein respective groups of inputs (18a-18e) and/or of outputs (22a-22j) are combined together in a module (16a-16e) to form a modular safety switching device (10) in particular in the form of a module series; and/or wherein each module (16a-16e) is arranged in a housing, in particular a similar housing, each having a plug (38a-38c) and a socket (38a-38c) for plugging into one another.

3. A safety device (10) in accordance with claim 1 or claim 2, wherein the safety control (14) is provided in a separate control module (12); and wherein the control module (12) in particular itself has inputs and/or outputs.

4. A safety device (10) in accordance with any one of the preceding claims,
wherein at least one first and one second bypass line (36a, 36b) are provided; and wherein the first bypass line (36a) connects the safety control (14) to at least one output (22a-22d) and the second bypass line (36b) connects at least one input (40a, 40b) to at least one output (22-e22j).

5. A safety device (10) in accordance with any one of the preceding claims,
wherein the outputs (22a-22j) are made to be configured to the bypass line (36); and wherein the configuring lays down for each output (22a-22j) connected to the bypass line (36) whether this output (22a-22j) should deactivate the connected actuator (24a, 24b) or not in response to the deactivation signal.

6. A safety device (10) in accordance with any one of the preceding claims,
wherein the inputs (18a-18c), the outputs (22a-22j), the safety control (14), the serial communications device (26) and/or the bypass line (36) are made for a function test and/or failsafe, in particular with two channels.

7. A safety device (10) in accordance with any one of the preceding claims,
wherein an external system control is provided and the safety control (14) is made such that controls of the actuators (24a, 24b) from the system control only act on the actuators (24a, 24b) when the safety control consents.

8. A safety device (10) in accordance with any one of the preceding claims,
wherein the safety control (14) is made to additionally transmit a deactivation signal over the serial communications device (26); and/or wherein the outputs (22a-22j) are made such that a switching on of a connected actuator (24a, 24b) can only take place when the safety control (14) consents.

9. A safety method for the safe deactivation of actuators (24a, 24b) connected to a plurality of outputs (22a-22j), wherein the outputs (22a-22j) communicate via a serial communications device (26), in particular via a bus, and are controlled by a safety control (14) which generates deactivation signals in dependence on sensor signals,
**characterized in that**,
on the deactivation, a deactivation signal is transmitted by the safety control (14) parallel to and in independently of the serial communication (26) over a bypass line (36) independently of a bus clock to at least one output (22a-22j) and to the actuator (24a, 24b) connected thereto.

10. A safety method in accordance with claim 9, wherein the deactivation signal is transmitted to a first group of outputs (22a-22d) over a first bypass line (36a) and to a second group of outputs (22e-22j) over a second bypass line (36b); and/or wherein the deactivation signal is generated by at least one safety control (14) and/or by at least one input (40a, 40b) to which a sensor (20c, 20d) is connected.

11. A safety method in accordance with claim 9 or claim 10, wherein a decision is made by means of a configuration for outputs (22a-22j) connected to the bypass line (36) whether the respective output should deactivate the connected actuator (24a, 24b) or not in response to a deactivation signal received over the bypass line (36).

12. A safety method in accordance with any one of the claims 9 to 11, wherein a safety control (14) controls the outputs (22a-22j), the inputs (18a-18e), the serial communications device (26) and the bypass line (36); and/or wherein the safety control (14) transmits a deactivation signal additionally to the bypass line (36) over the serial communications device (26).

13. A safety method in accordance with claim 12, wherein controls of an external system control are transmitted to the outputs (22a-22j) and these controls can only act on the actuators (24a, 24b) when the safety control (14) consents; and/or wherein a switching on of an actuator (24a, 24b) connected to an output (22a-22j) can only take place when the safety control (14) consents.

## Revendications

1. Dispositif de sécurité (10) comprenant au moins une commande de sécurité (14) et une pluralité de sorties (22a-22j) pour le pilotage sécurisé d'actionneurs (24a, 24b) branchés et une pluralité d'entrées (18a-18e) pour la réception de signaux de capteurs (20a, 20b) branchés, ainsi qu'un système de communication série (26), en particulier un bus, qui relie la commande de sécurité (14) aux sorties (22a-22j) et aux entrées (18a-18e) afin de recevoir et/ou d'émettre des paquets de données,
**caractérisé en ce que**
additionnellement à la communication série (26) il est prévu au moins une ligne de by-pass (36) parallèle à et indépendante de la communication série (26), qui est indépendante d'une horloge de bus et qui relie la commande de sécurité (14) ou une entrée (18a-18e) à au moins une sortie (22a-22j) afin de pouvoir transmettre à un actionneur (24a, 24b), branché à la sortie (22a-22j), un signal de coupure indépendamment de la communication série (26).

2. Dispositif de sécurité (10) selon la revendication 1,
dans lequel respectivement des groupes d'entrées (18a-18e) et/ou de sorties (22a-22j) sont regroupés en un module (16a-16e), afin de former un dispositif de sécurité modulaire (10), en particulier sous la forme d'une rangée de modules, et/ou dans lequel chaque module (16a-16e) est agencé dans un boîtier, en particulier de même type, avec respectivement un élément mâle (38a-38c) et un élément femelle (38a-38c) destinés à être enfichés l'un dans l'autre.

3. Dispositif de sécurité (10) selon la revendication 1 ou 2,
dans lequel la commande de sécurité (14) est prévue dans un module de commande (12) propre, et dans lequel le module de commande (12) comprend en particulier lui-même des entrées et/ou des sorties.

4. Dispositif de sécurité (10) selon l'une des revendications précédentes,
dans lequel il est prévu au moins une première et une seconde ligne de by-pass (36a, 36b), et dans lequel la première ligne de by-pass (36a) relie la commande de sécurité (14) à au moins une sortie (22a-22d) et la seconde ligne de by-pass (36b) relie au moins une entrée (40a, 40b) à au moins une sortie (22e-22j).

5. Dispositif de sécurité (10) selon l'une des revendications précédentes,
dans lequel les sorties (22a-22j) sont réalisées pour être configurées sur la ligne de by-pass (36), et dans lequel la configuration détermine, pour chaque sortie (22a-22j) reliée à la ligne de by-pass (36), si cette sortie (22a-22j) doit couper ou non l'actionneur branché (24a, 24b) en réaction au signal de coupure.

6. Dispositif de sécurité (10) selon l'une des revendications précédentes,
dans lequel les entrées (18a-18c), les sorties (22a-22j), la commande de sécurité (14), le système de communication série (26) et/ou la ligne de (36) by-pass sont réalisé(e)s pour un test fonctionnel et/ou à l'épreuve des erreurs, en particulier à deux canaux.

7. Dispositif de sécurité (10) selon l'une des revendications précédentes,
dans lequel il est prévu une commande d'installation externe, et la commande de sécurité (14) est réalisée de telle façon que les pilotages des actionneurs (24a, 24b) de la commande d'installation agissent uniquement sur les actionneurs (24a, 24b) si la commande de sécurité donne son accord.

8. Dispositif de sécurité (10) selon l'une des revendications précédentes,
dans lequel la commande de sécurité (14) est réalisée pour transmettre additionnellement un signal de coupure via le système de communication série (26), et/ou dans lequel les sorties (22a-22j) sont réalisées de telle manière qu'une mise en marche d'un actionneur (24a, 24b) branchés ne peut avoir lieu que si la commande de sécurité (14) donne son accord.

9. Procédé de sécurité pour la coupure sécurisée d'actionneurs (24a, 24b) branchés à une pluralité de sorties (22a-22j), dans lequel les sorties (22a-22j) communiquent via un système de communication série (26), en particulier un bus, et sont pilotées par une commande de sécurité (14) qui génère des signaux de coupure en fonction de signaux de capteurs,
**caractérisé en ce que**
lors de la coupure un signal de coupure est transmis à au moins une sortie (22a-22j) et à l'actionneur (24a, 24b) branché à celle-ci, indépendamment d'une horloge de bus et parallèlement à et indépendamment de la communication série (26) de la commande de sécurité (14) via une ligne de by-pass (36).

10. Procédé de sécurité selon la revendication 9,
dans lequel le signal de coupure est transmis à un premier groupe de sorties (22a-22d) via une première ligne de by-pass (36a) et à un second groupe de sorties (22e-22j) via une seconde ligne de by-pass (36b), et/ou dans lequel le signal de coupure est généré par au moins une commande de sécurité (14) et/ou par au moins une sortie (40a, 40b) à laquelle est branché un capteur (20c, 20d).

11. Procédé de sécurité selon la revendication 9 ou 10
dans lequel pour les sorties (22a-22j) branchées à la ligne de by-pass (36), on décide au moyen d'une configuration si la sortie respective doit couper ou non l'actionneur (22a, 24b) branché en réaction à un signal de coupure reçu via la ligne de by-pass (36).

12. Procédé de sécurité selon l'une des revendications 9 à 11,
dans lequel une commande de sécurité (14) commande les sorties (22a-22j), les entrées (18a-18e), le système de communication série (26) et la ligne de by-pass (36), et/ou dans lequel la commande de sécurité (14) transmet un signal de coupure additionnellement à la ligne de by-pass (36) via le système de communication série (26).

13. Procédé de sécurité selon la revendication 12,
dans lequel les pilotages d'une commande d'installation externe sont transmis aux sorties (22a-22j), et ces pilotages peuvent agir uniquement sur les actionneurs (24a, 24b) si la commande de sécurité (14) donne son accord, et/ou dans lequel une mise en marche d'un actionneur (24a, 24b) branché à une sortie (22a-22j) ne peut avoir lieu que si la commande de sécurité (14) donne son accord.
